(19) Europäisches Patentamt
European Patent Office
Office européen des brevets

(11) EP 1 893 711 B1

(12) **EUROPÄISCHE PATENTSCHRIFT**

(45) Veröffentlichungstag und Bekanntmachung des Hinweises auf die Patenterteilung:
**27.05.2009 Patentblatt 2009/22**

(21) Anmeldenummer: **05816328.8**

(22) Anmeldetag: **02.12.2005**

(51) Int Cl.:
***C09J 7/02*** *(2006.01)*

(86) Internationale Anmeldenummer:
**PCT/EP2005/056407**

(87) Internationale Veröffentlichungsnummer:
**WO 2006/133744 (21.12.2006 Gazette 2006/51)**

(54) **DOPPELSEITIGE HAFTKLEBEBÄNDER ZUR HERSTELLUNG VON LC-DISPLAYS MIT LICHTREFLEKTIERENDEN UND -ABSORBIERENDEN EIGENSCHAFTEN**

DOUBLE-SIDED PRESSURE-SENSITIVE ADHESIVE TAPES FOR THE PRODUCTION OF LC DISPLAYS WITH LIGHT-REFLECTING AND LIGHT-ABSORBING PROPERTIES

BANDES ADHESIVES DOUBLE FACE A PROPRIETES DE REFLEXION ET D'ABSORPTION DE LA LUMIERE, POUR LA FABRICATION D'AFFICHEURS A CRISTAUX LIQUIDES

(84) Benannte Vertragsstaaten:
**DE ES FR GB IT**

(30) Priorität: **13.06.2005 DE 102005027394**

(43) Veröffentlichungstag der Anmeldung:
**05.03.2008 Patentblatt 2008/10**

(73) Patentinhaber: **tesa SE**
**20253 Hamburg (DE)**

(72) Erfinder:
- **HUSEMANN, Marc**
  **22605 Hamburg (DE)**
- **STORBECK, Reinhard**
  **22457 Hamburg (DE)**

(56) Entgegenhaltungen:
**EP-A- 1 386 950**
**EP-A- 1 559 763**
**DE-A1- 10 243 215**
**US-A1- 2004 028 895**
**US-A1- 2004 076 768**

- **PATENT ABSTRACTS OF JAPAN Bd. 2003, Nr. 12, 5. Dezember 2003 (2003-12-05) & JP 2004 184443 A (DAINIPPON INK & CHEM INC), 2. Juli 2004 (2004-07-02)**
- **PATENT ABSTRACTS OF JAPAN Bd. 2003, Nr. 12, 5. Dezember 2003 (2003-12-05) & JP 2004 231736 A (DAINIPPON INK & CHEM INC), 19. August 2004 (2004-08-19)**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft doppelseitige Haftklebebänder mit mehrschichtigen Trägeraufbauten, mit mehrschichtigen Haftklebernassenaufbauten und mit lichtreflektierenden und absorbierenden Eigenschaften zur Herstellung von Flüssigkritall-Datenanzeigen (Liquid Crystal Displays, LCDs).

Haftklebebänder sind im Zeitalter der Industrialisierung weit verbreitete Verarbeitungshilfsmittel. Insbesondere für den Einsatz in der Computerindustrie werden .an Haftklebebänder sehr hohe Anforderungen gestellt. Neben einem geringen Ausgasungsverhalten sollten die Haftklebebänder in einem weiten Temperaturbereich einsetzbar sein und bestimmte optische Eigenschaften erfüllen.

Ein Einsatzgebiet sind optische Flüssigkristall-Datenanzeigen (Liquid Crystal Displays, LCDs), die für Computer, Fernsehgeräte, Laptops, PDAs, Mobiltelefone, Digitalkameras etc. benötigt werden. Fig. 1 zeigt das Konzept für ein doppelseitiges Klebeband mit einer schwarzen Schicht zur Absorption und einer Schicht zur Reflexion gemäß dem Stande der Technik; dabei bedeuten:

| | |
|---|---|
| 1 | LCD-Glas |
| 2 | doppelseitiges schwarz-weißes Klebeband |
| 3 | Haftklebemasse |
| 4 | Lichtquelle (LED) |
| 5 | Lichtstrahlen |
| 6 | doppelseitiges Klebeband |
| 7 | Lichtleiter |
| 8 | Reflektiorisfolie |
| 9 | LCD-Gehäuse |
| 10 | schwarze absorbierende Klebebandseite |
| 11 | reflektierende Seite |
| 12 | sichtbarer Bereich |
| 13 | "blinder" Bereich |

Zur Herstellung von LC-Displays werden Leuchtdioden (Light Emitting Diode, LED) als Lichtquelle mit dem LCD Modul verklebt. Hierfür werden in der Regel schwarze doppelseitige Haftklebebänder eingesetzt. Durch die schwarze Einfärbung soll erreicht werden, dass im Bereich des doppelseitigen Haftklebebandes kein Licht von innen nach außen und umgekehrt dringt.

Es existieren bereits viele Konzept, solch eine Schwarzfärbung zu erreichen. Auf der anderen Seite möchte man die Lichteffizienz des rückseitigen Lichtmoduls erhöhen, so dass bevorzugt doppelseitige Klebebänder eingesetzt werden, die auf einer Seite schwarz sind (lichtabsorbierend) und auf der anderen Seite lichtreflektierend.

Zur Herstellung der schwarzen Seite existieren viele Konzepte.

Ein Konzept zur Herstellung von schwarzen doppelseitigen Haftklebebändern besteht in der Einfärbung der Trägermaterials. In der Elektronik-Industrie werden sehr bevorzugt doppelseitige Haftklebebänder mit Polyesterfilm-Trägern (PET) eingesetzt, da diese sich sehr gut stanzen lassen. Die PET-Träger kann man ebenfalls mit Ruß oder schwarzen Farbpigmenten einfärben, um eine Absorption des Lichtes zu erreichen. Der Nachteil dieses bestehenden Konzeptes ist die geringe Absorption des Lichtes. In sehr dünnen Trägerschichten lassen sich nur eine relativ geringe Anzahl Ruß- oder anderer schwarzer Pigmentpartikel einbringen mit der Folge, dass keine vollständige Absorption des Lichtes erreicht wird. Mit dem Auge und auch mit intensiveren Lichtquellen (Lichtstärke größer 600 Candela) kann dann die mangelnde Absorption ermittelt werden.

Ein weiteres Konzept zur Herstellung von schwarzen doppelseitigen Haftklebebändern betrifft die Herstellung eines zweischichtigen Trägermaterials mittels Coextrusion. Trägerfolien werden in der Regel über Extrusion hergestellt. Durch die Coextrusion wird neben dem konventionellen Trägermaterial eine zweite schwarze Schicht coextrudiert, die die Funktion der Lichtabsorption erfüllt. Auch dieses Konzept weist verschiedene Nachteile auf. Z.B. müssen für die Extrusion Antiblockmittel eingesetzt werden, die dann im Produkt zu den sogenannten Pinholes führen. Diese Pinholes sind optische Störstellen (Lichtdurchtritt an diesen Löchern) und beeinflussen negativ die Funktionsweise im LCD.

Ein weiteres Problem sind die Schichtdicken, da die zwei Schichten zunächst einzeln in der Düse ausgeformt werden und sich somit insgesamt nur relativ dicke Trägerschichten realisieren lassen, mit der Folge, dass die Folie relativ dick und unflexibel wird und sich somit an die zu verklebenden Flächen nur noch schlecht anpasst. Zudem muss die schwarze.Schicht.ebenfalls relativ dick sein; da ansonsten keine vollständige Absorption realisiert werden kann. Ein weiterer Nachteil besteht in den veränderten mechanischen Eigenschaften des Trägermaterials, da die schwarze Schicht andere mechanische Eigenschaften wie das ursprüngliche Trägermaterial (z. B. reines PET) aufweist. Ein weiterer Nachteil für die zweischichtige Version des Trägermaterials ist die unterschiedliche Verankerung der Klebemasse auf dem coextrudierten Trägermaterial. Für diesen Fall der Ausführungsform ist immer eine Schwachstelle im doppelseitigen

Klebeband enthalten.

In einem weiteren Konzept wird eine schwarze Farblackschicht auf das Trägermaterial beschichtet. Dies kann einseitig oder doppelseitig auf dem Träger erfolgen. Auch dieses Konzept weist verschiedene Nachteile auf. Zum einen entstehen auch hier leicht Fehlstellen (Pinholes), die durch Antiblockmittel während des Folienextrusionsprozesses mit eingetragen werden. Diese sind für die finale Anwendung im LC-Display nicht akzeptabel. Weiterhin entsprechen die maximalen Absorptionseigenschaften nicht den Anforderungen, da nur relativ dünne Lackschichten aufgetragen werden können. Auch hier ist man in den Schichtdicken nach oben begrenzt, da sich ansonsten die mechanischen Eigenschaften des Trägermaterials verändern würden.

Bei der Entwicklung von LC-Displays entwickelt sich ein Trend. Zum einen sollen die LC-Displays leichter und sowie flacher werden und es besteht ein stark steigender Bedarf für immer größere Displays mit immer höherer Auflösung. Aus diesem Grund wurde das Design der Displays geändert, und die Lichtquelle rückt dementsprechend immer näher an das LCD-Panel, mit der Konsequenz, dass die Gefahr steigt, dass immer mehr Licht von außen in die Randzone des LCD-Panels eindringt ("blind area") (vgl. Figur 1). Mit dieser Entwicklung steigen auch die Anforderungen an die Abschattungseigenschaften (black out Eigenschaften) des doppelseitigen Klebebandes und es besteht somit der Bedarf nach neuen Konzepten zur Herstellung von schwarzen Klebebändern.

Auf der anderen Seite soll weiterhin das doppelseitige Klebeband reflektierende sein.

Dazu sind doppelseitige Haftklebebänder bekannt, die auf einer Seite eine metallische Schicht und einen schwarzen Träger besitzer. Mit diesen Haftklebebändern wurde im Hinblick auf Lichtreflektion auf der einen Seite und Absorption auf der gegenüber liegenden Seite eine deutliche Verbesserung erzielt, aber durch die Antiblockmittel in der Trägerschicht treten Unregelmäßigkeiten in der reflektierenden Seite auf.

Zur Erzielung einer reflektierenden Schicht kann nun wiederum die Haflwebemasse mit reflektierenden Partikeln versehen werden. Die erzielbaren reflektieren Eigenschaften sind aber nur relativ unzureichend.

In der JP 2002-350612 werden doppelseitige Klebebänder für LCD-Panels mit lichtschützenden Eigenschaften beschrieben. Die Funktion wird durch eine Metallschicht, welche ein- oder beidseitig auf die Trägerfolie aufgetragen ist, erreicht, wobei die Trägerfolie zusätzlich noch eingefärbt sein kann. Durch die Metallisierung ist die Herstellung des Klebebandes relativ aufwendig und das Klebeband selbst besitzt eine mangelhafte Planlage.

In der JP 2002-023663 werden ebenfalls doppelseitige Klebebänder für LCD-Panels mit lichtschützenden Eigenschaften beschrieben. Auch hier wird die Funktion durch eine Metallschicht, welche ein- oder beidseitig auf die Trägerfolie aufgetragen ist, erreicht.

In der DE 102 43 215 A werden doppelseitige Klebebänder für LC-Displays mit lichtabsorbierenden Eigenschaften auf der einen Seite und lichtreflektierenden Eigenschaften auf der anderen Seite beschrieben. In dieser Schrift werden schwarz/silberne doppelseitige Haftklebebänder beschrieben. Eine transparente oder gefärbte Trägerfolie wird einseitig metallisiert und auf der anderen Seite schwarz eingefärbt. Auf diesem Weg.werden bereits gute reflektierende Eigenschaften, aber noch mangelhafte absorbierende Eigenschaften erreicht, da Fehlstellen, z.B. aus der Folie durch Antiblockmittel, nur überlackiert werden und somit das Licht an dieser Stelle (Pinholes) noch durchscheinen kann.

Für die Verklebung von LC-Displays bzw. zur deren Herstellung besteht somit weiterhin der Bedarf für doppelseitige Haftklebebänder, welche die oben beschriebenen Mängel nicht oder nur in verminderter Weise aufweisen.

Aufhabe der Erfindung ist es daher ein doppelseitiges Haftklebeband zur Verfügung zu stellen, welches die Anwesenheit von Pinholes vermeidet, welches in der Lage ist, Licht Vollständig zu absorbieren und eine verbesserte Reflexion von Licht aufweist.

Gelöst wird die Aufgabe durch die erfindungsgemäßen Haftklebebänder, wie sie im Hauptanspruch dargestellt sind. Im Rahmen dieser Erfindung wurde überraschender Weise gefunden, dass mit einer zweischichtigen Haftklebemasse und einer PET-Folien-Metallisierung diese Eigenschaften erreicht werden können. Die Unteransprüche betreffen vorteilhafte Ausführungsformen des Erfindungsgegenstandes sowie die Verwendung der erfindungsgemäßen Haftklebebänder.

Dementsprechend betrifft der Hauptanspruch ein Haftklebeband, insbesondere zur Herstellung oder Verklebung von optischen Flüssigkristall-Datenanzeigen (LCDs), aufweisend eine Ober- und eine Unterseite, mit lichtreflektierenden Eigenschaften auf der Oberseite und lichtabsorbierenden Eigenschaften auf der Unterseite, weiterhin aufweisend eine Trägerfolie mit einer Ober- und einer Unterseite, wobei das Haftklebeband beidseitig mit einer äußeren Haftklebeschicht ausgerüstet ist, wobei weiterhin zumindest eine metallisch reflektierende Schicht zur Bewirkung der Lichtreflektion und zumindest eine schwarz eingefärbte Haftklebeschicht zur Bewirkung der Lichtabsorption zwischen den äußeren Haftklebeschichten vorgesehen ist und zumindest die äußere Haftklebeschicht auf der Oberseite transparent ist.

In einer bevorzugten Ausführungsform der Erfindung sind beide äußeren Haftklebeschichten transparent.

In einer vorteilhaften Ausführungsform liegt die zumindest eine metallisch reflektierende Schicht zwischen der Trägerfolie und der Haftklebeschicht auf der Oberseite.

In einer weiteren vorteilhaften Ausführungsform ist die zumindest eine metallisch reflektierende Schicht zwischen der Trägerfolie und der schwarz eingefärbten Haftklebeschicht vorgesehen. In diesem Fall ist die Trägerfolie

bevorzugt transparent oder semitransparent ausgeführt.

In einer ebenfalls bevorzugten Ausführungsform sind zumindest zwei metallisch reflektierende Schichten vorgesehen, von denen die eine zwischen der Trägerfolie und der Haftklebeschicht auf der Oberseite und die andere zwischen der Trägerfolie und der schwarz eingefärbten Haftklebeschicht vorgesehen ist. In einer vorteilhaften Variante dieser Ausführungsform ist die Trägerfolie ebenfalls transparent oder semitransparent.

Im folgenden werden einige vorteilhafte Ausführungsformen des erfindungsgemäßen Klebebandes dargestellt, ohne sich durch die Wahl der Beispiele unnötig beschränken zu wollen.

Die Haftklebeschichten (d) und (d') auf den beiden Seiten des erfindungsgemäßen Haftklebebandes können jeweils identisch oder unterschiedlich sein, insbesondere was ihre Ausgestaltung (Schichtdicke und dergl.) und ihre chemische Zusammensetzung angeht. In besonders bevorzugter Weise ist die Haftklebemasse zumindest auf der Seite des Haftklebebandes transparent. Es kann im erfinderischen Sinne aber auch vorteilhaft sein, die Haftklebemassen auf beiden Seiten des Haftklebebandes transparent auszuführen.

In einer ersten vorteilhaften Ausführungsform besteht das erfinderische Haftklebeband aus einer Trägerfolienschicht (a), einer metallisch reflektierenden Schichten (b), einer farbtragenden Haftklebemasse (c) und zwei Haftklebeschichten (d) und (d'), von denen zumindest die Haftklebeschicht (d) auf der Oberseite transparent ist. Bevorzugt befinden sich hier die metallisch reflektierende Schicht und die farbtragende Häftklebemasse auf unterschiedlichen Seiten der Trägerfolie. Diese Ausführungsform ist in der Figur 2 dargestellt.

In einer weiteren bevorzugten Ausführungsform der Erfindung, wie sie die Figur 3 zeigt, besteht das doppelseitige Haftklebeband aus einer Trägerfolie (a), zwei metallisch reflektierenden Schichten (b), einer farbträgenden Haftklebemasse (c) und zwei Haftklebeschichten (d) und (d'). Wiederum ist die Haftklebeschicht (d) auf der Oberseite bevorzugt transparent.

In einer weiteren bevorzugten Ausführungsform der Erfindung gemäß Figur 4 besteht das doppelseitige Haftklebeband aus einer Trägerfolie (a), einer metallisch reflektierenden Schichten (b), einer farbtragenden Haftklebemassenschicht (c) und zwei Haftklebeschichten (d) und (d'). Die metallisch reflektierende Schicht (b) und die farbtragende Haftklebemassenschicht (c) befinden sich hier auf derselben Seite der Trägerfolie.
Dabei liegt die metallisch reflektierende Schicht (b) vorteilhaft zwischen dem hier transparenten oder mindestens semitransparenten- Folienträger und der farbtragenden Haftklebemassenschicht (c). Die Haftklebeschicht (d) auf der Oberseite ist wiederum vorteilhaft transparente.

Im Folgenden wird die Erfindung weiter erläutert. Die angegebenen Grenzwerte sind als Inklusivwerte zu verstehen, also im angegebenen Grenzbereich enthalten.

Die Trägerfolie (a) ist bevorzugt zwischen 5 und 250 μm, mehr bevorzugt zwischen 8 und 50 μm, äußerst bevorzugt zwischen 12 und 36 μm dick und bevorzugt transparent. Die Schichten (b) sind metallisch glänzend und lichtreflektierend. Vorteilhaft als metallisch reflektierende Schicht ist eine silberfarbene Lackierung; in einer weiteren bevorzugten Ausführungsform wird die Folie (a) ein- oder beidseitig mit Metall bedampft, z.B. mit Aluminimum oder Silber. Auch eine Kombination der vorgenannten Ausführungen (also eine Bedampfung mit anschließender Lackierung oder umgekehrt) ist realisierbar. Die Schichtdicke der Schichten (b) liegt bevorzugt zwischen 5 nm und 200 nm.
Die Schichten (c) sind farbtragende dunkle, sehr bevorzugt schwarze Haftklebemassenschichten, die jeweils bevorzugt eine Schichtdicke zwischen 5 μm und 100 μm aufweisen.
Die Haftklebemasse für (c) kann unterschiedlicher chemischer Natur sein und kann unterschiedliche schwarze Pigmente aufweisen, die sich vorteilhaft auf die lichtabsorbierenden Eigenschaften ausüben.
Die Haftklebemasseschichten (d) und (d') besitzen bevorzugt eine Dicke von jeweils zwischen 5 μm und 250 μm. Die einzelnen Schichten (b), (c), (d) und (d') können sich innerhalb des doppelseitigen Haftklebebandes im Hinblick auf die Schichtdicke unterscheiden können, so dass z.B. unterschiedlich dicke Haftklebemassenschichten (d) und (d') aufgetragen werden können, oder einzelne, mehrere oder auch alle Schichten können identisch gewählt werden.

<u>Trägerfofie (a)</u>

Als Folienträger können prinzipiell alle filmischen Polymerträger eingesetzt werden, die transparent sind. So lassen sich z.B. Polyethylen, Polypropylen, Polyimid, Polyester, Polyamid, Polymethacrylat, fluorierte Polymerfolien, etc. einsetzen. In einer besonders bevorzugten Ausführungsform werden Polyesterfolien eingesetzt, besonders bevorzugt PET-Folien (Polyethylenterephthalat). Die Folien können entspannt sein oder eine oder mehrere Vorzugsrichtungen aufweisen. Vorzugsrichtungen werden erzielt durch Streckung in einer oder in zwei Richtungen. Normalerweise werden für den Herstellprozess von Folien, beispielsweise PET-Folien, Antiblockmittel, wie z.B. Siliziumdioxid, Kieselkreide oder Kreide, Zeolithe, eingesetzt.

Antiblockmittel sollen das Zusammenbacken flächiger Kunststofffolien unter Druck und Temperatur zu Blöcken verhindern. Üblicherweise arbeitet man die Antiblockmittel in die Thermoplastenmischung ein. Die Partikel fungieren dann als Abstandhalter.

Solche Folien sind für die erfinderischen doppelseitigen Klebebänder vorteilhaft einsetzbar. Für die erfinderischen Haftklebebänder lassen sich aber auch Folien einsetzen, die keine Antiblockmittel oder nur zu einem sehr geringen Anteil enthalten. Ein Beispiel für eine solche Folien ist z.B. die Hostaphan™ 5000 Serie von Mitsubishi Polyester Film (PET 5211, PET 5333 PET 5210).

Weiterhin sind sehr dünne, beispielsweise 12 μm dicke, PET Folien zu bevorzugen, da diese sehr gute klebtechnische Eigenschaften für das doppelseitige Klebeband zu lassen, da hier die Folie sehr flexibel ist und sich gut den Oberflächenrauhigkeiten der zur verklebenden Substrate anpassen kann.

Zur Verbesserung der Verankerung der Lackschichten ist es sehr vorteilhaft, wenn die Folien vorbehandelt werden Die Folien können geätzt sein (z.B. Trichloressigäure oder Trifluoressigsäure), mit Corona oder Plasma vorbehandelt sein oder mit einem Primer (z.B. Saran) ausgestattet sein.

Des Weiteren können vorteilhaft - insbesondere wenn ein transparentes oder semitransparentes Folienmaterial vorliegt - Farbpigmente oder farbtragende Partikel zum Folienmaterial hinzugegeben werden. So eignen sich z.B. Ruß zur Schwarzfärbung und Titandioxidpartikel zur Weißfärbung. Die Pigmente oder Partikel sollten aber bevorzugt kleiner im Durchmesser sein als die finale Schichtdicke der Trägerfolie. Optimale Einfärbungen lassen sich mit 10 bis 40 Gew.-% Partikelanteilen, bezogen auf das Folienmaterial, erzielen.

Reflektierende Schicht (b)

Für die Herstellung einer hochreflektierenden Seite kann zum einen ein silberfarbener Lack auf die Folienschicht (a) aufgetragen werden oder die Folienschicht (a) einseitig oder beidseitig mit einem Metall, z.B. Aluminium oder Silber bedampft werden. Für die Variante silberfarbener Lack wird eine Bindermatrix mit silbernen Farbpigmenten und/oder Metallpartikeln abgemischt. Als Bindermatrix eignen sich z.B. Polyurethane oder Polyester, die einen hohen Brechungsindex und eine hohe Transparenz aufweisen. Die Farbpigmente können aber auch in einer Polyacrylat oder Polymethacrylatmatrix eingebunden werden und dann als Lack ausgehärtet werden.

In einer sehr bevorzugten Ausführungsform wird die Folienschicht (a) beidseitig mit Aluminium oder Silber bedampft (besputtert). Um besonders hervorragende reflektierende Eigenschaften zu erreichen, muss der Sputterprozess zur Bedampfung so gesteuert werden, dass das Aluminium oder Silber sehr gieichmäßig aufgetragen ist, um eine optimale Reflektion zu erzielen (Vermeidung von Streueffekten). Weiterhin wird in einer sehr bevorzugen Ausführung die PET-Folie mit Plasma vorbehandelt, bevor mit Aluminium oder Silber bedampft wird. Durch den Einsatz der reflektierenden Schicht (b) wird zum einen gezielt das Licht reflektiert und zum anderen die Transmission des Lichtes durch das Trägermaterial vermindert bzw vermieden. Weiterhin werden Oberflächenrauhigkeiten der Trägerfolie kompensiert.

Für den Herstellungsprozess kann es von Vorteil sein, wenn die reflektierende Seite vor der Beschichtung mit der Haftklebemasse zusätzlich durch einen Klarlack geschützt wird.

Haftklebemassenschicht (c)

Die Haftklebemassenschicht (c) kann verschiedene Funktionen erfüllen. In einer vorteilhaften Ausführungsform der Erfindung besitzt die Schicht (c) die Funktion der im Wesentlichen vollständigen Absorption des Außenlichtes. Daher liegt die Transmission des Haftklebebandes in diesem Fall in einem Wellenlängenbereich von 300 - 800 nm bevorzugt bei < 0,5 %, mehr bevorzugt bei < 0,1 %, äußerst bevorzugt bei < 0,01 %. Dies wird vorteilhaft erfindungsgemäß mit einer schwarzen Haftklebemasserischicht erreicht.

In einer sehr zu bevorzugenden efinderischen Ausführungsform werden als schwarzfärbende Partikel Ruß oder Graphitpartikel in die Haftklebematrix eingemischt. Durch diese Additivierung wird bei sehr hohem Additivierungsgehalt (>20 Gew.-%), neben der im Wesentlichen vollständigen Lichtabsorption, zusätzlich eine elektrische Leitfähigkeit erzielt, so dass die erfinderischen doppelseitigen Häftklebebänder ebenfalls antistatische Eigenschaften aufweisen. Als Haftklebematrix können alle dem Fachmann bekannten Haftklebemassensysteme eingesetzt werden. Als Haftklebemassensysteme sind z.B. geeignet Acrylat-, Naturkautschuk-, Synthesekautschuk-, Silikon- oder EVA-Massen. Weiterhin lassen sich auch die weiteren, dem Fachmann bekannten Haftklebemassen verarbeiten, wie sie z.B. im "Handbook of Pressure Sensitive Adhesive Technology" von Donatas Satas (van Nostrand, New York 1989) aufgeführt sind.

Für Naturkautschukkiebemassen wird der Naturkautschuk bevorzugt bis zu einem Molekulargewicht (Gewichtsmittel) nicht unter etwa 100.000 Dalton, bevorzugt nicht unter 500.000 Dalton gemahlen und additiviert.

Bei Kautschuk/Synthesekautschuk als Ausgangsmaterial für den Kleber sind weite Variationsmöglichkeiten gegeben. Eingesetzt werden können Naturkautschuke oder Synthesekautschuke oder beliebige Blends aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Syrithesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.% zugesetzt werden, und zwar bezogen auf den Gesamtelastomeranteil. Stellvertretend genannt seien an dieser stelle vor allem die besonders verträglichen Styrol-Isopren-Styrol- (SIS) und Styrol-Butadien-Styrol (SBS) -Typen.

In einer erfinderisch bevorzugten Ausführungsform werden bevorzugt (Meth)acrylathaftklebemassen eingesetzt.

Erfindungsgemäß eingesetzte (Meth)Acrylathaftklebemassen, welche durch radikalische Polymerisation erhältlich sind, bestehen bevorzugt zu mindestens 50 Gew.-% auf zumindest einem acrylischen Monomer aus der Gruppe der Verbindungen der folgenden allgemeinen Formel:

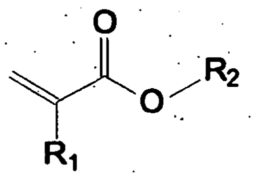

Dabei ist der Rest $R_1$ = H oder $CH_3$; und der Rest $R_2$ H oder $CH_3$ oder wird gewählt aus der Gruppe beinhaltend die verzweigten und unverzweigten, gesättigten Alkylgruppen mit 1 - 30 Kohlenstoffatomen.

Die Monomere werden bevorzugt dermaßen gewählt, dass die resultierenden Polymere - bei Raumtemperatur oder höheren Temperaturen als Haflklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New, York 1989) besitzen.

Für die erfinderische Ausführungsform ist es von besonderem Vorteil, wenn die Haftklebematrix aus (c) identisch ist mit der Haftklebemasse (d) bzw. (d'). Durch die Verwendung von der gleichen Haftklebemasse lässt sich das viskoelastische Profil der Schichten (c) und (d) bzw (d') verstärken, was wiederum zu einer bedeutenden Verbesserung der klebtechnischen Eigenschaften führt (dies ist ein besonderer Vorteil gegenüber mit schwarzen Lacken beschichteten Klebebändern oder mit schwarzen dicken Trägem ausgestatteten Klebebändern). Dies kann für Acrylathaftklebemassen durch einen bevorzugten Glasübergangstemperatur $T_G$ der Polymere von $T_G \leq 25$ °C erreicht werden. Entsprechend werden die Monomere sehr bevorzugt derart ausgesucht und die mengenmäßige Zusammensetzung der Monomermischung vorteilhaft derart, gewählt, dass sich nach der ***Fox***-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Ein weiterer Vorteil dieser Erfindung besteht darin, dass keine farbtragenden schwarzen Partikel auf das zu verklebende Substrat wandern können, da die transparenten Haftklebemassen auf den Außenseiten des Haftklebebandes liegen. Dies ist ein wichtiger Aspekt für die Repositionierbarkeit, da im Extremfall bei einer falschen Verklebung beim entsprechenden Ablösen schwarze Rückstände auf der LCD-Folie verbleiben würden und das gesamte Teil unbrauchbar damit wäre. Im Rahmen dieser Erfindung ist es im Rahmen einer besonders bevorzugten Ausführungsform somit vorteilhaft, wenn (c) und (d) bzw. (d') die gleiche Haftkiebematrix aufweisen.

Ein weiterer Vorteil der identischen Haftklebematrix besteht in der reduzierten Neigung der Farbstoffe oder farbtragenden Partikel, in die Klebemassenschichten (d) bzw. (d') zu migrieren. Es besteht somit nicht die Gefahr, dass die farbtragenden Partikel, bedingt durch z.B. eine unterschiedliche Polarität, in einer Matrix bessertöstich sind und dorthin migrieren.

Des Weiteren können durch den zweischichtigen Aufbau auch noch zusätzliche, Funktionen implementiert werden. So lassen sich in Schicht (c) noch Blähmittel hinzusetzen, die die Vibrationseigenschaften anschließend erhöhen können, oder weitere Füttstoffe, die den Herstellungspreis des Klebebandes herabsetzen, ohne dass die verklebende Haftklebemasseschicht (d) bzw. (d') dadurch beeinflusst werden würde.

Haftklebemassen (d) und (d')

Die Haftklebemassen (d) und (d') sind in einer bevorzugten Ausführungsform auf beiden Seiten des Haftklebebandes identisch. Es kann aber in einer speziellen Ausführungsform auch von Vorteil sein, wenn sich die Haftklebemassen (d) und (d') voreinander unterscheiden, insbesondere durch ihre Schichtdicke und/oder ihre chemische Zusammensetzung. So lassen sich auf diesem Weg z.B. unterschiedliche haftklebrige Eigenschaften einstellen. Als Haftktebemassensysteme für das erfinderische doppelseitige Haftklebeband werden bevorzugt Acrylat-, Naturkautschuk-, Synthesekautschuk-, Silikon- oder EVA-Kleber eingesetzt. Für den Fall, dass das doppelseitige erfinderische Haftklebeband auf zumindest einer Seite eine hohe Reflexion aufweiset, weist die Haftklebemasse auf zumindest dieser Seite bevorzugt eine hohe Transparenz auf. Weiterhin lassen sich auch die weiteren, dem Fachmann bekannten Haftklebemassen verarbeiten, wie sie z.B im "Handbook of Pressure Sensitive Adhesive Technology" von Donatas Satas (van Nostrand, New York 1989) aufgeführt sind.

Für Naturkautschukklebemassen wird der Naturkautschuk bevorzugt bis zu einem Molekulargewicht (Gewichtsmittel) nicht unter etwa 100.000 Dalton, bevorzugt nicht unter 500.000 Dalton gemahlen und additiviert.
Bei Kautschuk/Synthesekautschuk als Ausgangsmaterial für den Kleber sind weite Variationsmöglichkeiten gegeben. Eingesetzt werden können Naturkautschuke oder Synthesekautschuke oder beliebige Blends aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.
Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

In einer erfinderisch bevorzugten Ausführungsform werden bevorzugt (Meth)acrylathaftklebemassen eingesetzt.

Erfindungsgemäß eingesetzte (Meth)Acrylathaftklemassen, welche durch radikalische-Polymerisation erhältlich sind, bestehen bevorzugt zu mindestens 50 Gew.-% auf zumindest einem acrylischen Monomer aus der Gruppe der Verbindungen der folgenden allgemeinen Formel:

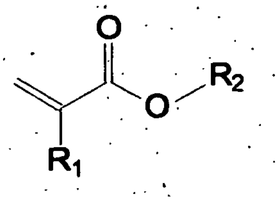

Dabei ist der Rest $R_1$ = H oder $CH_3$; und der Rest $R_2$ = H oder $CH_3$ oder wird gewählt aus der Gruppe beinhaltend die.verzweigten und unverzweigten, gesättigten Alkylgruppen mit 1 - 30 Kohlenstoffatomen.

Die Monomere werden bevorzugt dermaßen gewählt, dass die resultierenden Polymere bei Raumtemperatur oder höheren, Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

In einer weiteren erfinderischen Ausführungsform wird die Comonomerzusammensetzung derart gewählt, dass sich die Haftklebemassen als hitzeaktivierbare Haftklebemassen einsetzen lassen.

Die Polymere lassen sich bevorzugt durch Polymerisation einer Monomermischung gewinnen, welche sich aus Acrylsäureestern und/oder Methacrylsäureestern und/oder deren freien Säuren mit der Formel $CH_2 = CH(R_1)(COOR_2)$ zusammensetzt, wobei $R_1$ = H oder $CH_3$ und $R_2$ eine Alkylkette mit 1 - 20 C-Atomen oder H ist.

Die Molmassen $M_w$ (Gewichtsmittel) der eingesetzten Polyacrylate betragen bevorzugt $M_w \geq 200.000$ g/mol.

In einer sehr bevorzugten. Weise werden Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat; n-Octylmethacrylat, n-Nonylacrylat, Laurylacrylat; Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindest 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylaaylat.

In einer vorteilhaften Vorgehensweise werden Monomere eingesetzt, die polare Gruppe wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Moderate basische Monomere sind z.B. N,N-Dialkylsubstituierte Amide, wie z.B. N,N-Dimethylacrylamid, N, N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Butoxymethyl)methacrylamid, N-Methylolacrylamid, N-(Ethoxymethyl)acrylamid, N-Isopropylacrylamid, wobei diese Aufzählung nicht abschließend zu verstehen ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylmethacrylat, 2-Butoxyethylacrylat; Cyanoethylmethacrylat, Cyanoethylacrylat, Glycerylmethacrylat -6-Hydroxyhexylmethacrylat, Vinylessigsäure, Tetrahydrokfurylacrlyat, β-Acryloyloxypropionsäure, Trichloracylsäure, Fumarsäure, Crotonsäure, Aconitsäure, Dimethylacrylsäure, wobei diese Aufzählung nicht abschließend zu verstehen ist.

In einer weiteren sehr bevorzugten Vorgehensweise werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer vorteilhaften Vorgehensweise Photoinitiatoren mit einer copolymerisierbaren Doppelbindung eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36®). Im Prinzip können alle' dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren die mit einer Doppelbindung funktionalisiert werden können, wird in Fouassier: "Photoinitiation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid; Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend zu verstehen ist.

Durch die Erhöhung des aromatischen Anteils steigt der Brechungsindex der Haftklebemasse an und die Streuung zwischen LCD-Glas und Haftklebemasse durch z.B. Fremdlicht wird minimiert.

Zur Weiterentwicklung können den Haftklebemassen Harze beigemischt sein. Als zuzusetzende klebrig machende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenpheholharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohtenwasserstoffharze sowie Naturharze. Auf die Darstellung des Wissensstandes im pHandbook of Pressure Sensitive Adhesive Technology" von Donatas Satas (van Nostrand, 1989) sei ausdrücklich hingewiesen.

Auch hier werden zur Verbesserung der Transparenz bevorzugt transparente und sehr gut mit dem Polymer verträgliche Harze eingesetzt. Hydrierte oder teilhydrierte Harze weisen häufig diese Eigenschaften auf.

Weiterhin können optional Weichmacher (Plastifizierungsmittel), weitere Füllstofle (wie. z.B. Fasern, Ruß, Zinkoxid, Kreide, Voll- oder Hohlglaskugeln, Mikrokugeln aus anderen Materialien, Kieselsäure, Silikate), Keimbildner, elektrisch leitfähige Materialien, wie z.B. konjugierte Polymere, dotierte konjugierte Polymere, Metallpigmente; Metallpartikel, Metallsalze, Graphit, etc., Blähmittel, Compoundierungsmittel und/oder Alterungsschutzmittel, z.B. in Form von primären und sekundären Antioxidantien oder in Form von Lichtschutzmitteln zugesetzt sein.

In einer weiteren günstigen Ausführungsform der Erfindung enthält die Haftklebemasse (d'), die auf der schwarzen Schicht (c) aufgetragen ist, lichtabsorbierende Partikel, wie z.B. schwarze Farbpigmente oder Ruß-oder Graphitpartikel als Füllstoff.

Zusätzlich können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide. Weiterhin können auch thermisch aktivierbare Vernetzer, wie z.B. Lewis-Säure, Metallchelate oder multifunktionelle Isocyanate zugesetzt sein.

Zu einer optionalen Vernetzung mit UV-Licht können den Haftklebemassen UV-absorbie.rende Photoinitiatoren zugesetzt werden. Nützliche Photoinitiatoren, welche sehr gut zu verwenden sind, sind Berizoinether, wie z. B. Benzoinmethylether und Benzoinisopropylether, substituierte Acetophenone, wie z.B. 2,2-Diethoxyacetophenon (ertiältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie Z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinitiatoren und andere vom Typ Norrish-I oder Norrish-II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinitiation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

**Herstellverfahren für die Acrylathaftklebemassen**

Zur Polymerisation werden die Monomere dermaßen gewählt, dass die resultierenden Polymere bei Raumtemperatur oder höheren Temperaturen als Haftklebemassen einigesetzt werden können, insbesondere derart, dass die resultierenden Polymere haftktebende Eigenschaften entsprechend des "Handbook of Pressure Sensitive Adhesive Technology" von Donatas Satas (van Nostrand, New York 1989) besitzen.
Zur Erzielung einer für Haftklebemassen bevorzugten Glasübergangstemperatur $T_G$ der Polymere von $T_G \leq 25$ °C werden entsprechend dem vorstehend gesagten die Monomere sehr bevorzugt derart ausgesucht und die mengenmäßige Zusammensetzung der Monomermischung vorteilhaft derart gewählt, dass sich nach der *Fox*-Gleichung (G1) (vgl. T.G.. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Hauben Weyl, Methoden der Organischen Chemie, Vol. E 19a, S.60 - 147 beschrieben. Diese Methoden werden in bevorzugter Weise in Analogie angewendet.
Beispiele für Radikalquellen sind Peroxide, Hydroperoxide und Azoverbindungen, als einige nicht airsschließliche Beispiele für typische Radikalinitiatoren seien hier genannt Kaliumperoxodisulfat, Dibenzoylperoxid, Cumolhydroperoxid, Cyclohexanonperoxid, Di-tert.-butylperoxid, Azodiisosäurebutyronitril, Cyclohexylsulfonylacetylperoxid, Diisopropylpercarbonat, tert.-Butylperoctoat, Benzpinacol. In einer sehr bevorzugten Ausführungsform wird als radikalischer Initiator 1,1'-Azo-bis-(cyclohexanearbonsäurenitril) (Vazo 88™ der Fa. DuPont) oder Azoisobutyronitril (AIBN) verwendet.

Die gewichtsmittleren Moiekulargewichte Mw der bei der radikalischen. Polymerisation entstehenden Haftklebemassen werden sehr bevorzugt derart gewählt, dass sie in einem Bereich von 200.000 bis 4.000.000 g/mol liegen; speziell für die weitere Verwendung als elektrisch-leitfähiger Schmelzhaftkleber mit Rückstellvermögen werden Haftklebemassen mit mittleren Molekulargewichten $M_w$ von 400.000 bis 1.400.000 g/mol hergestellt. Die Bestimmung des mittleren Molekulargewichtes erfolgt über Größenausschlüsschromatographie (GPC) oder Matrix-unterstützte Laser-Desorption/Ionisations-Massenspektrometrie (MALDI-MS).

Die Polymerisation kann in Substanz, in Gegenwart eines oder mehrerer organische Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische lösungsmittel sind reine Alkane (z.B. Hexan, Heptan, Octan, Isooctan), aromatische Kohlenwasserstoffe (z.B. Benzol, Totuol, Xylol), Ester (z.B. Essigsäureethylester, Essigsäurepropyl-. -butyl- oder -hexylester), halogenierte Kohlenwasserstoffe (z.B. Chlorbenzol), Alkanole (z.B. Methanol, Ethanol, Ethylenglycol, Ethylenglycolmonömethylether) und Ether (z.B. Diethylether, Dibutylether) oder Gemische davon. Die wässrigen Polymerisationsreaktionen können mit einem mit Wasser mischbaren oder hydrophilen Colösungsmittel versetzt werden, um zur gewährleisten, dass das Reaktionsgemisch während des monomerumsatzes in Form einer homogenen Phase vorliegt. Vorteilhaft verwendbare Colösungsmittel für die vorliegende Erfindung werden gewählt aus der folgenden Gruppe, bestehend aus atiphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen, davon, Ester, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160°C, je nach Initiatortyp, initiiert werden.

Für die Herstellung kann es auch von Vorteil sein, die (Meth)acrylathaftklebemassen in Substanz zu polymerisieren. Hier eignet sich insbesondere die Präpolymerisationstechnik. Die Polymerisation wird mit UV-Licht initiiert, aber nur zu einem geringen Umsatz ca. 10 - 30% geführt. Anschließend kann dieser Polymersirup z.B. in Folien eingeschweißt werden (im einfachsten Fall Eiswürfel) und dann in Wasser zu hohem Umsatz durch polymerisiert. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel venivendet, wie z.B. aliphatische und cycloaliphatische Kohlenwasserstoffe, oder auch aromatische Kohlenwasserstoffe.

Das lebende polymer wird in diesem Fall im Allgemeinen durch die Struktur $P_L$(A)-Me repräsentiert, wobei Me ein Metall der Gruppe I, wie z.B. Lithium, Natrium oder Kalium, und $P_L$(A) ein wachsende Polymer aus den Acrylatmonomeren ist. Die Molmasse des herzustellenden Polymers wird durch das Verhältnis von Initiatorkonzentration zu Monomerkönzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind. Initiatoren auf Basis von samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminiuin-Verbindungen. In einer sehr bevorzugten Version sind die Liganden und Coinitiatoren so gewählt, dass Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Poly(meth)acrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

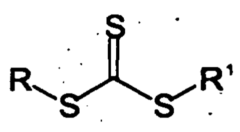

(I)

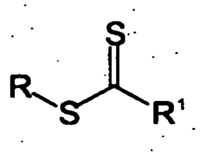

(II)

worin R und $R^1$ unabhängig voneinander gewählt oder gleich sind und

- verzweigte und unverzweigte $C_1$- bis $C_{18}$-Alkylreste; $C_3$- bis $C_{18}$-Alkenylreste; $C_3$- bis $C_{18}$-Alkinylreste;
- $C_1$- bis $C_{18}$-Alkxoyreste
- durch zumindest eine OH-Gruppe oder ein Halogenatom oder einen Silylether' substituierte $C_1$- bis $C_{18}$-AJkylreste, $C_3$- bis $C_{18}$-Alkenylreste; $C_3$- bis $C_{18}$-Alkinylreste;
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$-Aryl-oder Benzylreste
- Wasserstoff

darstellen.

Kontrollteagerizien des Typs (I) bestehen bevorzugt aus folgenden weiter eingeschränkten Verbindungen:

Halogenatome sind hierbei bevorzugt F, Cl, Br oder I, mehr bevorzugt Cl und Br. Als
Alkyl-, Alkenyl- und Alkinylreste in den verschiedenen Substituenten eignen sich hervorragend sowohl lineare ats auch verzweigte Ketten.
Beispiele für Alkylreste, welche 1 bis 18 Kohlenstoffatorne enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinylreste mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.
Ein geeigneter $C_2$-$C_{18}$-Hetero-Alkylrest mit mindestens einem O-Atom in der Kohlenstoffkette ist beispielsweise $-CH_2-CH_2-O-CH_2CH_3$.
Als $C_3$-$C_{12}$-Cycloalkylreste dienen beispielsweise Cyclopropyl, Cyclopentyl, Cyclohexyl oder Trimethylcyclohexyl.
Als $C_6$-$C_{18}$-Arylreste dienen beispielsweise Phenyl, Naphthyl, Benzyl, 4-tert.-Butylbenzyl- oder weitere substituierte Phenyl, wie z.B. Ethyl, Toluol, Xylol, Mesitylen, Isopropylbenzol, Dichlorobenzol oder Bromtoluol.
Die vorstehenden Auftistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

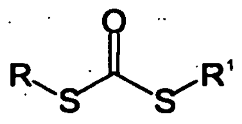
(III)

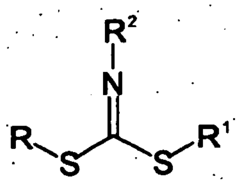
(IV)

wobei $R^2$ ebenfalls unabhängig von R und $R^1$, aus der oben aufgeführte Gruppe für diese Reste gewählt werden kann.

Beim konventionellen ,RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haflklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes-Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt, werden Zur Radikalstabitisierung werden in günstige Vorgehensweise Nitroxide des Typs (Va) oder (Vb)

eingesetzt:

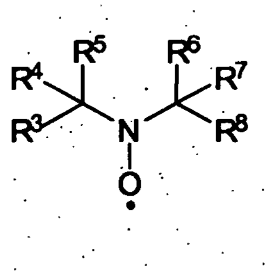

(Va)

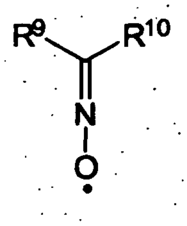

(Vb)

wobei $R^3$, $R^4$, $R^5$, $R^6$, $R^7$ $R^8$, $R^9$, $R^{10}$ unabhangig voneinander folgende Verbindungen der Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester-$COOR^{11}$, Alkoxide -$OR^{12}$ und/oder Phosphonate -$PO(OR^{13})_2$, wobei $R^{11}$, $N^{12}$ oder $R^{13}$ für Reste aus der Gruppe ii) stechen.

Verbindungen der (Va) oder (Vb) können auch an Polymerketten jeglicher Art gebunden sein (vorrangig in dem Sinne, dass zumindest einer der oben genannten Reste eine derartige Polymerkette darstellt) und somit zum Aufbau von Polyacrylathaftklebemassen genutzt werden.
Mehr bevorzugt werden kontrollierte Regler für die Polymerisation von Verbindungen des Typs eingesetzt:

- 2,2,5,5-Tetramethyl-1-pyrrolidinyloxyl (PROXYL), 3-Carbamoyl-PROXYL, 2,2-dimethyl-4,5-cydohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-tert.-Butylnitroxid
- Diphenylnitroxid
- tert.-Butyl-tert.-amyl Nitroxid

Eine Reihe weiterer Polymerisationsmethoden, nach denen die Haftklebemassen in alternativer Vorgehensweise hergestellt werden können, lassen sich aus dem Stand der Technik wählen:
US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im Allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle, Rädikalverbindungen, wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten.

Als weitere kontrollierte Polymerisationsmethode lässt sich in vorteilhafter Weise zur Synthese der Polyacrylathaftklebemassen die Atom Transfer Radical Polymerisation (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, **Ir-,** Ag- oder Au-Komplexe (EP 0 824 111 A1; EP 826 698 A1; EP 824 110 A1; EP 841 346 Ar ; EP 850 957 A1) eingesetzt werden. Die unter schiedlichen Möglichkeiten der ATRP sind ferner in den Schriften US 5,945,491 A, US 5,854,364 A und US 5,789,487 A beschrieben.

Beschichtungsverfahren, Ausrüstung des Trägermaterials

Zur Herstellung wird in einer bevorzugten Ausführungsform die Haftidebernasse aus Lösung auf das Trägermaterial beschichtet. Zur Steigerung der Verankerung der Haftklebemasse können optional die Schichten (b) bzw. (c) und (c)' vorbehandelt werden. So kinn z.B. mit Corona oder mit Plasma vorbehandelt werden, es kann aus der Schmelze oder aus Lösung ein Primer aufgetragen werden oder es kann chemisch geätzt wenden. Insbesondere bei der metallischen Schicht sollte aber die Corona-Leistung minimiert werden, da ansonsten Pinholes in die Folie hinein gebrannt werden. Für die Beschichtung der Haftklebemasse aus Lösung wird über Wärmezufuhr z.B. in einem Trockenkanal das Lösemittel entfernt und gegebenenfalls die Vernetzungsreaktion initiiert.

Die oben beschriebenen Polymere können weiterhin auch als Hotmelt-Systeme (also aus der Schmelze) beschichtet werden. Für das Herstellungsverfahren kann es daher erforderlich sein, das Lösemittel von der Häftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %. Der Hotmelt wird aus der Schmelze weiterverarbeitet.

Zur Beschichtung als Hötmelt können unterschiedliche Beschichtungsverfahren herangezogen werden. In einer vorteilhaften Ausführung werden die Haftklebemassen über ein Walzenbeschichtungsverfahren beschichtet. Unterschiedliche Walzenbeschichtungsverfahren sind im "Handbook of Pressure Sensitive Adhesive Technology" von Donatas Satas (van Nostrand, New York 1989) beschrieben. In einer weiteren Ausführung wird über eine Schmelzdüse beschichtet. In einem weiteren bevorzugten Verfahren wird durch Extrusion beschichtet. Die Extrusionsbeschichtung wird bevorzugt mit einer Extrusionsdüse vorgenommen. Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals. Durch die Beschichtung können die Haftklebemassen auch eine Orientierung erfahren.

Für die Herstellung der zweischichtigen Haftklebemasse auf einer Seite sind drei verschiedene Verfahren besonders zu bevorzugen:

a) Coextrusion

Hier werden die Schichten (c) und (d) gleichzeitig aus einer Coextrusionsdüse beschichtet, so dass die Haftklebemassen in einem Schritt aufgebracht werden können. Dies ist insbesondere kein Problem, wenn die Viskositäten der Haftklebemassen (c) und (d) vergleichbar sind.

b) nachfolgende Beschichtung aus Lösung

Hier wird zunächst die Haftklebemasse (c) aus Lösung auf den Träger aufgebracht getrocknet und anschließend die Haftklebemasse (d) aus Lösung in einem zweiten Strich aufgebracht. Dieser Prozess kann in zwei Arbeitsgängen ablaufen oder in einem Maschinenarbeitsgang, wobei dann mit einem Auftragswerk (c) aus Lösung aufgebracht wird, in einem kurzen Trockenkanal getrocknet wird und dann (d) wieder mit einem Auftragswerk aufgebracht wird und dann in einem längeren Trockenkanal vollständig getrocknet wird.

c) simultane Beschitung aus Lösung

Hier wird mit einer Düse und zwei Kanälen aus Lösung aufgetragen, wobei beide Schichten (c) und (d) nahezu gleichzeitig aufgetragen werden und dann in einem Schritt simultan getrocknet werden.

Weiterhin kann es erforderlich sein, dass die Haftklebemassen vernetzt werden. In einer bevorzugten Ausführung wird thermisch, mit Elektronen- und/oder UV-Strahlung vernetzt.

Zur UV-Vernetzung wird mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators und dem einzustellenden Vernetzungsgrad angepasst.

Weiterhin werden die Haftklebemassen in einer vorteilhaften Ausführungsform der Erfindung mit Elektronenstrahlen vernetzt. Typische Bestrahlungsvorrichtungen, die vorteilhaft eingesetzt werden, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation'for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 und 150 kGy, insbesondere zwischen 20 und 100 kGy.

Es können auch beide Vernetzungsverfahren angewendet werden oder andere Verfahren, die hochenergetische Bestrahlung ermöglichen.

Weiterhin ist Gegenstand der Erfindung die Verwendung der erfinderischen doppelseitigen Haftklebebänder zur Verklebung oder Herstellung von LC-Displays. Für die Verwendung als Haftklebeband können die doppelseitigen Haftklebebänder mit einem oder zwei Trennfolien oder Trennpapieren abgedeckt sein. In einer bevorzugten Ausführungsform werden silikonisierte oder fluorierte Folien oder Papiere, wie z.B. Glassine, HPDE oder LDPE gecoatete Papiere eingesetzt, die wiederum mit einer Releaseschicht basierend auf Silikonen oder fluorierten Polymeren versehen sind. In einer besonders bevorzugten Ausführungsform werden als Abdeckung silikonisierte PET Folien eingesetzt.

Insbesondere vorteilhaft sind die erfindungsgemäßen Haftklebebänder zur Verklebung von Leuchtdioden (Light Emitting Diode, LED) als Lichtquelle mit dem LCD-Modul geeignet.

**Beispiele**

Die Erfindung wird im Folgenden beschrieben, ohne sich durch die Wahl der Beispiele unnötig beschränken zu wollen.

Folgende Prüfmethoden wurden angewendet.

Prüfmethoden

A. Transmission

Die Transmission wurde im Wellenlängenbereich von 190 bis 900 nm mit einem Uvikon 923 der Fa. Biotek Kontron gemessen. Die Messung wird bei 23°C durchgeführt. Die Absolute Transmission wird als Wert bei 550 nm in % angegeben bezogen auf die vollständige Lichtabsorption (Transmission 0 % = kein Lichtdurchlass; Transmission 100 % = vollständiger Lichtdurchlass).

B. Pinholes

Eine handelsübliche sehr starke Lichtquelle (z.B. Overheadprojektor Typ Liesegangtrainer 400 KG Typ 649, Halogenlampe 36 V, 400 W) wird komplett lichtdicht mit eine Maske abgedeckt. Diese Maske enthält in der Mitte eine kreisrunde Öffnung mit einem Durchmesser von 5 cm. Auf diese kreisrunde Öffnung wird das doppelseitige LCD-Klebeband aufgelegt. In vollständig abgedunkelter Umgebung werden dann die Anzahl der Pinholes elektronisch oder visuell ausgezählt. Diese sind bei eingeschalteter Lichtquelle als durchscheinende Punkte erkennbar.

C. Reflektion

Der Reflektionstest wird nach DIN Norm 5036 Teil 3, DIN 5033 Teil 3 und DIN 5033 Teil 4 durchgeführt. Als Messgerät wurde eine Ulbrichtsche Kugel Typ LMT (50 cm Durchmesser) eingesetzt in Verbindung mit einem Digitalem Anzeigegerät TYP LMT Tau-ρ-Meter. Die integralen Messungen erfolgen mit einer Lichtquelle entsprechend Normlicht A und V(λ)- angepasstem Si-Photoelement. Es wurde gegen eine Glas-Referenzprobe gemessen. Der Reflektionsgrad wird als Summe aus gerichteten und gestreuten Lichtanteilen in % angebeben.

Polymer 1

Ein für radikalische Polymerisationen konventioneller 200 L-Reaktor wurde mit 2400 g Acrylsäure, 64 kg 2-Ethylhexylacrylat, 6,4 kg Methylacrylat und 53,3 kg Aceton/Isopropanol (95:5) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5h und 10 h wurde mit jeweils 15 kg Acetone/Isopropanol (95:5) verdünnt. Nach 6 und 8 h wurden jeweils 100 g Dicyclohe1xylperoxydicarbonat (Perkadox 16®, Fa. Akzo Nobel) gelöst in jeweils 800 g Aceton hinzugegeben. Die Reaktion wurde nach 24 h Reaktionszeit angebrochen und auf Raumtemperatur abgekühlt. Bevor die Masse beschichtet wird, wird das Polymer 1 mit Isopropanol auf 30 % Feststoffgehalt verdünnt. Anschließend wird unter kräftigem Rühren 0,3 Gew.-% Aluminium-(III)-acetylacetonat (3-%ige Lösung Isopropanol) bezogen auf das Polymer 1 hinzugemischt.

Rußmasse 1

In einem Fass wird das Polymer 1 mit Siedegrenzenbenzin auf 30 % Feststoffgehalt verdünnt. Anschließend wird unter kräftigem Rühren 8 Gew.-% Ruß (Printex™ 25, Degussa AG) und 0,3 Gew.-% Aluminium-(III)-acetylacetonat (3-%ige Lösung Isopropanol) jeweils bezogen auf das Polymer 1 hinzugemischt. Zur Homogenisierung wird die Lösung für 10 Minuten mit einem Homogenisierer (Ultraturrax) homogenisiert.

Rußmasse 2

In einem Fass wird das Polymer 1 mit Siedegrenzenbenzin auf 30 % Feststoffgehalt verdünnt. Anschließend wird unter kräftigem Rühren 10 Gew.-% Ruß (Printex™ 25, Degussa AG) und 0,3 Gew.-% Aluminium-(III)-acetylacetonat (3-%ige Lösung Isopropanol) jeweils bezogen auf das Polymer 1 hinzugemischt. Zur Homogenisierung wird die Lösung für 10 Minuten mit einem Homogenisierer (Ultraturrax) homogenisiert.

Vernetzung

Die Haftklebemassen werden aus Lösung auf eine silikonisierte 75 μm starke PET-Folie (Trennfolie der Fa. Siliconature) beschichtet und für 10 Minuten im Trockenschrank bei 100 °C getrocknet.

Folie (Al-Bedampfung):

Eine 12 μm PET-Folie, extrudiert ohne Antiblockmittel, der Fa. Mitsubishi (Hostaphan™ 5210) wurde einseitig oder beidseitig mit Aluminium bedampft, bis eine vollflächige Aluminiumschicht aufgetragen war. Die Folie wurde in einer Breite von 300 mm nach dem Sputtering-Verfahren bedampft. Hier wird positiv geladenes, ionisiertes Argongas in eine Hochvakuumkammer geleitet. Die geladenen Ionen treffen dann auf eine negativ geladenen Al-Platte und lösen auf molekularer Ebene Aluminiumpartikel ab, die sich dann auf den Polyesterfilm, der über die Platte geführt wird, ablagern.

Beispiel 1 (schwarz/silbern):

Auf einer Seite der beidseitig Al-bedampften Folie (Basis Hostaphan™ 5210) wird aus Lösung zunächst Rußmasse 1 flächig aufgebracht und für 10 Minuten bei 100 °C getrocknet. Der Masseauftrag beträgt 50 g/m$^2$. Dann wird auf diese Schicht Polymer 1 aus Lösung flächig aufgebracht und für 10 Minuten bei 100 °C getrocknet. Der Masseauftrag beträgt für diese Schicht ebenfalls 50 g/m$^2$. Auf der gegenüberliegenden Seite wird dann das Polymer 1 mit 100 g/m$^2$ flächig aufgebracht, wobei wiederum 10 Minuten bei 100°C getrocknet wurde.

Beispiel 2 (schwarz/silbern):

Auf einer Seite der beidseitig Al-bedampften Folie (Basis Hostaphan™ 5210) wird aus Lösung zunächst Rußmasse 2 flächig aufgebracht und für 10 Minuten bei 100°C getrocknet. Der Masseauftrag beträgt 50 g/m$^2$. Dann wird auf diese Schicht Polymer 1 aus Lösung flächig aufgebracht und für 10 Minuten bei 100°C getrocknet. Der Masseauftrag beträgt für diese Schicht ebenfalls 50 g/m$^2$. Auf der gegenüberliegenden Seite wird dann das Polymer 1 mit 100 g/m$^2$ flächig aufgebracht, wobei wiederum 10 Minuten bei 100°C getrocknet wurde.

Beispiel 3 (schwarz/silbern):

Auf der nicht metallischen Seite der Al-bedampften Folie (Basis Hostaphan™ 5210) wird aus Lösung zunächst Rußmasse 2 flächig aufgebracht und für 10 Minuten bei 100°C getrocknet. Der Masseauftrag beträgt 50 g/m$^2$. Dann wird auf diese Schicht Polymer 1 aus Lösung flächig aufgebracht und für 10 Minuten bei 100 °C getrocknet. Der Masseauftrag beträgt für diese Schicht ebenfalls 50 g/m$^2$. Auf der gegenüberliegenden Seite (metallische Seite) wird dann das Polymer 1 mit 100 g/m$^2$ flächig aufgebracht, wobei wiederum 10 Minuten bei 100 °C getrocknet wurde.

Beispiel 4 (schwarz/silbern):

Auf der metallischen Seite der Al-bedampften Folie (Basis Hostaphan™ 5210) wird aus Lösung zunächst Rußmasse 2 flächig aufgebracht und für 10 Minuten bei 100°C getrocknet. Der Masseauftrag beträgt 50 $g/m^2$. Dann wird auf diese Schicht Polymer 1 aus Lösung flächig aufgebracht und für 10 Minuten bei 100 °C getrocknet. Der Masseauftrag beträgt für diese Schicht ebenfalls 50 $g/m^2$. Auf der gegenüberliegenden Seite (nichtmetallische Seite) wird dann das Polymer 1 mit 100 $g/m^2$ flächig aufgebracht, wobei wiederum 10 Minuten bei 100°C getrocknet wurde.

**Ergebnisse**

Die Beispiele 1 bis 4 wurden nach den Prüfmethoden A, B und C ausgetestet. Die Ergebnisse sind in Tabelle 1 dargestellt.

Tabelle 1

| Beispiel | Transmission (Test A) | Pinholes (Test B) | Reflektion (total) (Test C) |
|---|---|---|---|
| Beispiel 1 | < 0,1 % | 0 | 86,4 % |
| Beispiel 2 | < 0,1% | 0 | 86,2 % |
| Beispiel 3 | < 0,1 % | 0 | 86,6 % |
| Beispiel 4 | < 0,1 % | 0 | 81,7 % |

Den Ergebnissen aus Tabelle 1 kann entnommenen werden, dass die Beispiele 1 bis 4 im Hinblick auf optische Fehlstellen (Pinhole-Freiheit) und Transmission hervorragende Eigenschaften aufweisen. Weiterhin konnte mit Test C gezeigt werden, dass die Beispiele 1 bis 4 nicht nur lichtabsorbierende Eigenschaften aufweisen, sondern auf der metallischen Seite auch sehr hohe lichtreflektierende Eigenschaften besitzen. Für den Anwendungsfall im LCD bedeutet dies, dass die Lichtausbeute im Lichtkanal deutlich erhöht wird.

**Patentansprüche**

1. Haftklebeband, insbesondere zur Herstellung einer Verklebung von optischen Flossigkristall-Datenanzeigen (LCDs), aufweisend eine Ober- und eine Unterseite, mit lichtreflektierenden Eigenschaften auf der Oberseite und lichtabsorbierenden Eigenschaften auf der Unterseite,
weiterhin aufweisend eine Trägerfolie mit einer Ober- und einer Unterseite,
wobei das Haftklebeband beidseitig mit einer äußeren Haftklebeschicht ausgerüstet ist,
**dadurch gekennzeichnet, dass**

    - die Trägerfolie transparent ist,
    - zumindest eine schwarz eingefärbte Haftklebeschicht zur Bewirkung der Lichtabsorption zwischen den äußeren Haftklebeschichten vorgesehen ist,
    - zumindest die äußere Haftklebeschicht auf der Oberseite transparent ist und
    - zumindest zwei metallisch reflektierende Schichten vorgesehen sind, von denen die eine zwischen der Trägerfolie und der Haftklebeschicht auf der Oberseite und die andere zwischen der Träderfolie und der schwarz eingefärbten Haftklebeschicht vorgesehen ist.

2. Haftklebeband nach Anspruch1, **dadurch gekennzeichnet, dass** beide äußeren Haftklebeschichten transparent sind.

3. Haftklebeband nach zumindest einem der vorangehenden Ansprüche, **gekennzeichnet durch** die Schichtenabfolge:

    transparente Haftklebemasse (Schicht d) - metallisch reflektierende Schicht (Schicht b) - Trägerfolie (Schicht a) - metallische reflektierende Schicht (Schicht b) - schwarz eingefärbte Haftklebemasse (Schicht c) - Haftklebemasse (Schicht d').

4. Verwendung eines Haftktebebandes nach zumindest einem der vorstehenden Ansprüche zur Herstellung oder

Verklebung einer optischen Flüssigkristall-Datenanzeige.

5. Verwendung nach Anspruch 4 zur Verklebung von LCD-Gläsern.

6. Flüssigkristall-Datenanzeige-Gerät aufweisend ein Haftklebeband nach zumindest einem der Ansprüche 1 bis 3.

## Claims

1. Pressure-sensitive adhesive tape, in particular for the production of an adhesive bond of optical liquid-crystal data displays (LCDs),
having a top side and a bottom side, having light-reflecting properties on the top side and light-absorbing properties on the bottom side,
additionally having a carrier film having a top side and a bottom side,
the pressure-sensitive adhesive tape being furnished on both sides with an outer pressure-sensitive adhesive layer,
**characterized in that**

   - the carrier film is transparent,
   - at least one black-colored pressure-sensitive adhesive layer for effecting light absorption is provided between the outer pressure-sensitive adhesive layers,
   - at least the outer pressure-sensitive adhesive layer on the top side is transparent and
   - at least two metallically reflecting layers are provided, of which one is provided between the carrier film and the pressure-sensitive adhesive layer on the top side and the other is provided between the carrier film and the black-colored pressure-sensitive adhesive layer.

2. The pressure-sensitive adhesive tape according to claim 1, **characterized in that** both outer pressure-sensitive adhesive layers are transparent.

3. Pressure-sensitive adhesive tape according to at least one of the preceding claims, **characterized by** the following layer sequence:

   transparent pressure-sensitive adhesive (layer d) - metallically reflecting layer (layer b) - carrier film (layer a) - metallically reflecting layer (layer b) - black-colored pressure-sensitive adhesive (layer c) - pressure-sensitive adhesive (layer d').

4. Use of a pressure-sensitive adhesive tape according to at least one of the preceding claims for producing or adhesively bonding an optical liquid-crystal data display.

5. Use according to claim 4 for adhesively bonding LCD glasses.

6. Liquid-crystal data display device comprising a pressure-sensitive adhesive tape according to at least one of claims 1 to 3.

## Revendications

1. Ruban autoadhésif, en particulier pour la fabrication ou le collage d'afficheurs de données à cristaux liquides (LCD), comportant une face supérieure et une face inférieure, à propriétés de réflexion de la lumière sur la face supérieure et propriétés d'absorption de la lumière sur la face inférieure,
comportant en outre un film de support ayant une face supérieure et une face inférieure,
le ruban autoadhésif étant sur les deux faces muni d'une couche autoadhésive externe,
**caractérisé en ce que**

   - le film de support est transparent,
   - au moins une couche autoadhésive colorée en noir est prévue entre les couches autoadhésives externes pour provoquer l'absorption de la lumière,
   - au moins la couche autoadhésive externe sur la face supérieure est transparente et
   - sont prévues au moins deux couches réfléchissantes métalliques, dont l'une est disposée entre le film de

support et la couche autoadhésive sur la face supérieure et l'autre est disposée entre le film de support et la couche autoadhésive colorée en noir.

2. Ruban autoadhésif selon la revendication 1, **caractérisé en ce que** les deux couches autoadhésives externes sont transparentes.

3. Ruban autoadhésif selon au moins l'une des revendications précédentes, **caractérisé par** la succession de couches :

matière autoadhésive transparente (couche d) - matière réfléchissante métallique (couche b) - film de support (couche a) - couche réfléchissante métallique (couche b) - matière autoadhésive colorée en noir (couche c) matière autoadhésive (couche d').

4. Utilisation d'un ruban autoadhésif selon au moins l'une des revendications précédentes, pour la fabrication ou le collage d'un afficheur optique d'informations à cristaux liquides.

5. Utilisation selon la revendication 4, pour le collage de verres de LCD.

6. Appareil à afficheur à cristaux liquides, comprenant un ruban autoadhésif selon au moins l'une des revendications 1 à 3.

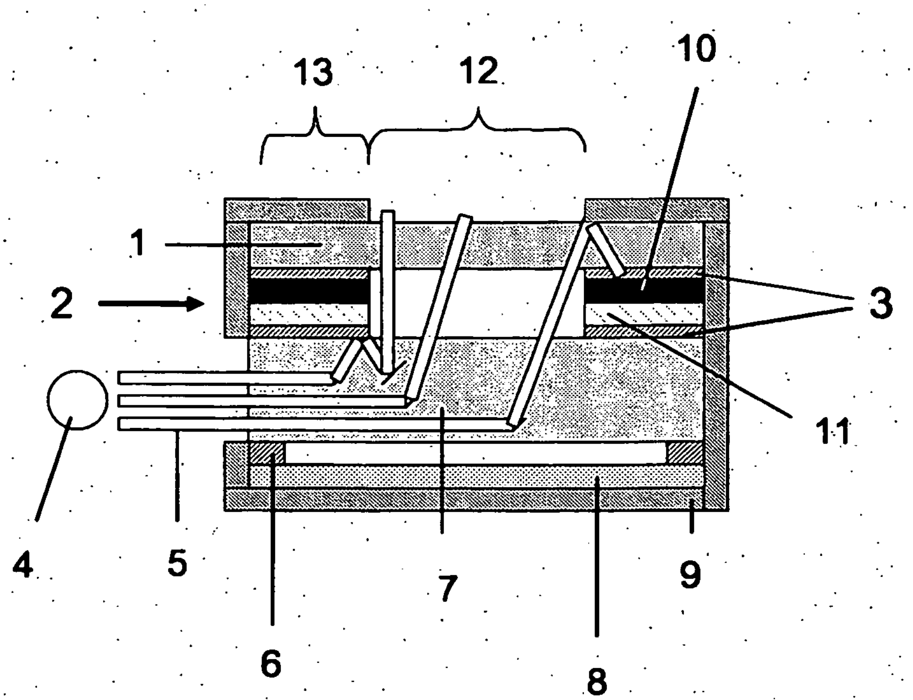


Fig. 1

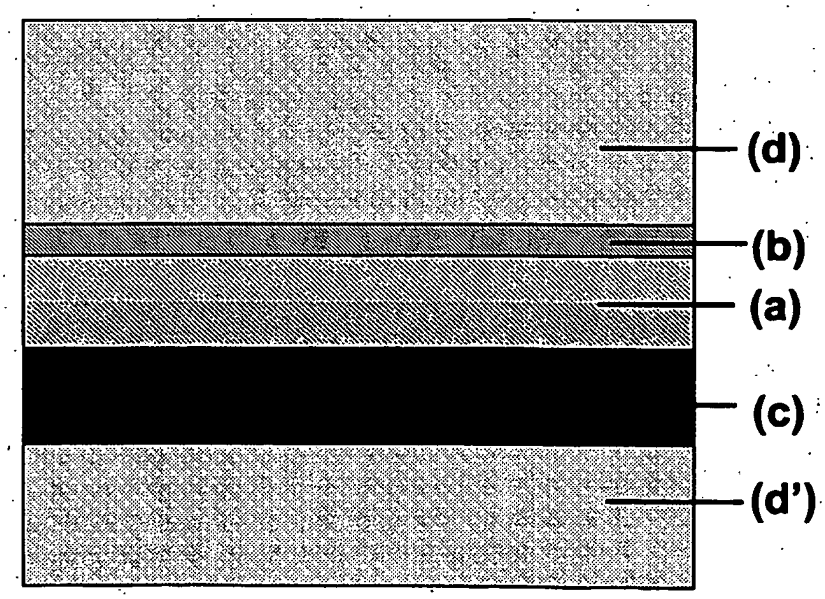


Fig. 2

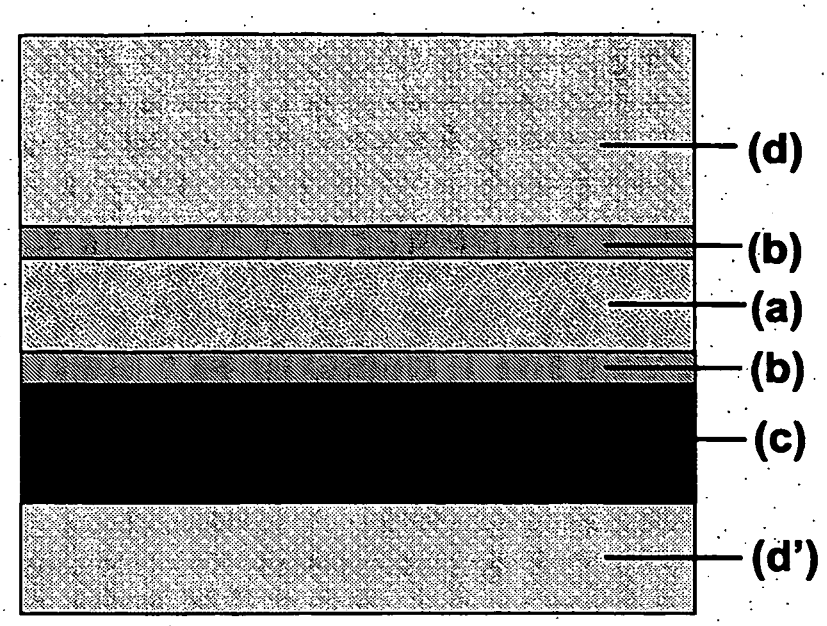


Fig. 3

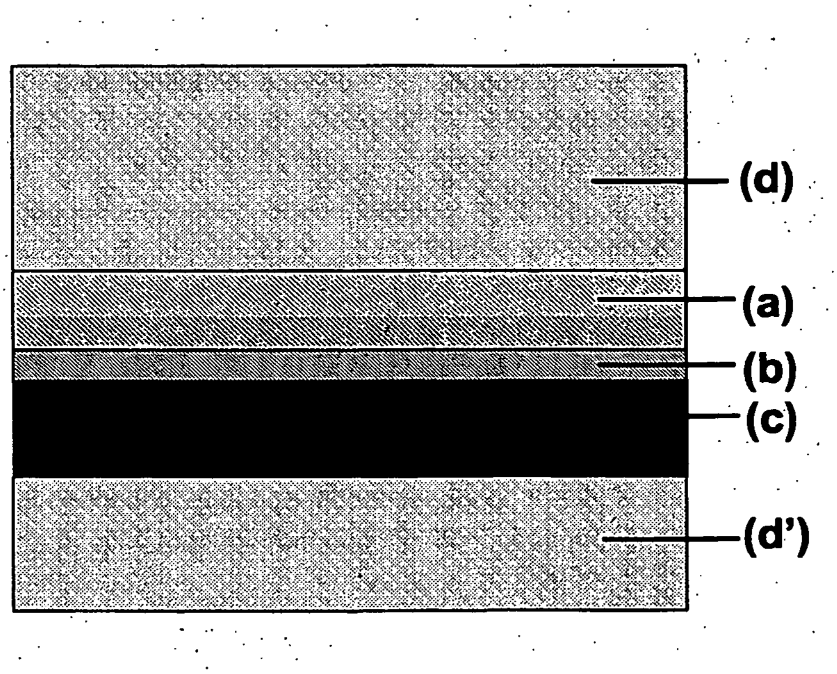


Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2002350612 A
- JP 2002023663 A
- DE 10243215 A
- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A
- EP 850957 A1
- US 5945491 A
- US 5854364 A
- US 5789487 A


### In der Beschreibung aufgeführte Nicht-Patentliteratur


- **von Donatas Satas.** Handbook of Pressure Sensitive Adhesive Technology. 1989
- **T.G. Fox.** *Bull. Am. Phys. Soc.,* 1956, vol. 1, 123
- **Fouassier.** Photoinitiation, Photopolymerization and Photocuring: Fundamentals and Applications. Hanser-Verlag, 1995
- **Carroy et al.** Chemistry and Technology of UV and EB Formulation for Coatings, Inks and Paints. 1994
- **von Donatas Satas.** pHandbook of Pressure Sensitive Adhesive Technology. 1989
- **von Fouassier.** Photoinitiation, Photopolymerization and Photocuring: Fundamentals and Applications. Hanser-Verlag, 1995
- **Carroy et al.** Chemistry and Technology of UV and EB Formulation for Coatings, Inks and Paints. SITA, 1994
- **T.G.. Fox.** *Bull. Am. Phys. Soc.,* 1956, vol. 1, 123
- **Hauben Weyl.** Methoden der Organischen Chemie. vol. E 19a, 60-147
- *Macromolecules,* 1995, vol. 28, 7886
- Chemistry and Technology of UV and EB formulation’for Coatings. Inks and Paints. SITA, 1991, vol. 1